(19) Europäisches Patentamt / European Patent Office / Office européen des brevets

(11) **EP 2 803 550 A1**

(12) **DEMANDE DE BREVET EUROPEEN**

(43) Date de publication:
**19.11.2014 Bulletin 2014/47**

(51) Int Cl.:
***B61B 7/00*** (2006.01)

(21) Numéro de dépôt: **14168325.0**

(22) Date de dépôt: **14.05.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **17.05.2013 FR 1354426**

(71) Demandeur: **Tecnmant France**
**81000 Albi (FR)**

(72) Inventeurs:
• **Borel, Philippe**
**81000 ALBI (FR)**
• **Perez, Jean-François**
**81000 ALBI (FR)**

(74) Mandataire: **Cornuejols, Georges**
**RAVINA SAS**
**8, rue des Briquetiers**
**ZA de Font Grasse**
**BP 10077**
**31703 Blagnac Cedex (FR)**

(54) **Dispositif et procédé de régulation de la vitesse d'un équipement de transport**

(57) L'invention se rapporte à des moyens pour permettre la régulation d'une vitesse d'un équipement de transport, en particulier pour des remontées mécaniques déployées dans une station de ski. Ils comportent un module automatisé comprenant des moyens de calcul, ainsi qu'une interface d'entrée et une interface de sortie adaptées à être couplées à l'équipement de transport. Les moyens de calculs sont configurés de sorte à :
- recevoir et/ou obtenir, par l'interface d'entrée, au moins une information relative à l'équipement de transport, dont l'une se rapporte à un nombre de personnes et/ou d'objets transportés ou à transporter ;
- vérifier si ladite information relative à l'équipement respecte au moins une consigne ;
- si ladite information relative à l'équipement ne respecte pas ladite consigne, émettre sur l'interface de sortie, un message de commande comportant des informations pour permettre à l'équipement de transport d'adapter sa vitesse.

Fig. 1

EP 2 803 550 A1

## Description

### Introduction

La présente invention se rapporte à des dispositifs et à des procédés automatisés de régulation de vitesse pour équipements de transport. Elle concerne plus particulièrement des moyens pour gérer, efficacement, sous diverses contraintes et avec divers objectifs, un réseau de remontées mécaniques, déployées dans une station de ski.

### Art antérieur

Les équipements de transport, par exemple les remontées mécaniques dans un domaine skiable, ou encore les convoyeurs permettant le déplacement de produits manufacturés ou de matières premières dans un environnement industriel, sont confrontés au problème de la régulation de la vitesse de déplacement des objets transportés. Diverses contraintes, parfois complexes et liées, doivent être prises en compte afin d'optimiser d'une part les performances, mais également d'autre part d'atteindre d'autres objectifs comme limiter le coût d'exploitation ou encore l'usure.

Dans le cas d'une station de ski, la vitesse à laquelle chacune des remontées mécaniques est exploitée, est adaptée à la fréquentation des skieurs se présentant dans l'aire de départ. Aujourd'hui, ces adaptations sont réalisées manuellement et empiriquement : une personne chargée du fonctionnement d'une remontée évalue visuellement le nombre de skieurs présents au point de départ et modifie la vitesse de défilement de cette dernière en conséquence, à l'aide d'une commande radio déportée ou depuis le poste de commande placé à proximité. Ces changements sont souvent brutaux, mal dosés, et générateurs de problèmes techniques sur l'installation. En outre, les paramètres pris en compte sont peu fiables et en nombre restreint.

Par ailleurs, il existe également des méthodes permettant d'évaluer ou prévoir une affluence de skieurs sur diverses sections d'un réseau d'une station de ski. Le document de brevet FR 2 958 776 divulgue un tel procédé. La fréquentation d'un réseau de remontées mécaniques est estimée en fonction notamment du nombre de skieurs passant à proximité de bornes disposées dans le réseau et d'un temps d'occupation des pistes. Cette estimation est alors mise à disposition du personnel exploitant. Cependant, le changement effectif de la vitesse des différentes remontées est toujours réalisé manuellement, et les paramètres pris en compte demeurent en nombre limité.

C'est pourquoi il existe un besoin de disposer de moyens automatisés pour équipements de transport, de régulation de la vitesse de transport d'objets, la vitesse étant optimisée en fonction de diverses contraintes et/ou divers objectifs. Plus particulièrement, dans le cas d'un réseau de remontées mécaniques déployées dans une station de ski, il existe un besoin pour fournir une solution permettant de réguler automatiquement les vitesses de défilement desdites remontées, individuellement et/ou collectivement, tout en optimisant le temps d'attente des usagers en même temps que d'autres paramètres, par exemple la consommation d'énergie, ou encore en prenant en compte l'usure des équipements.

### Résumé de l'invention

Un des objectifs de l'invention est de fournir des moyens automatisés permettant de gérer efficacement des flux d'objets ou personnes transportés, d'optimiser la consommation d'électricité, notamment la consommation instantanée d'énergie motrice, ou encore de réduire les phénomènes d'usures des pièces, et donc la fréquence des périodes d'entretien des équipements sur une période donnée. Un autre objectif de l'invention est de s'affranchir de l'intervention manuelle humaine. Un autre objectif de l'invention est de gérer automatiquement l'exploitation de l'équipement de transport en fonction des contraintes, des informations disponibles préalablement, ou encore des informations collectées en cours de fonctionnement. Un autre objectif de l'invention est de proposer des moyens simples à installer sur des réseaux existants. Un autre objectif de l'invention est de proposer des moyens additionnels sans intervenir sur les sous-systèmes des équipements soumis à de fortes contraintes sécuritaires.

Un ou plusieurs de ces objectifs sont remplis par les dispositifs et les méthodes selon les revendications indépendantes. Les revendications dépendantes fournissent en outre des solutions à ces objectifs et/ou d'autres avantages.

Plus particulièrement, selon un premier aspect, l'invention se rapporte à un dispositif adapté pour permettre une régulation d'une vitesse d'au moins un équipement de transport d'objets et/ou de personnes. Le dispositif comporte un module automatisé comprenant des moyens de calcul, ainsi qu'une interface d'entrée et une interface de sortie adaptées à être couplées à l'équipement de transport. Les moyens de calculs sont configurés de sorte à :

- recevoir et/ou obtenir, par l'interface d'entrée, au moins une information relative à l'équipement de transport dont l'une se rapporte à un nombre de personnes et/ou d'objets transportés ou à transporter ;
- vérifier si ladite information relative à l'équipement respecte au moins une consigne ;
- si ladite information relative à l'équipement ne respecte pas ladite consigne, émettre sur l'interface de sortie, un message de commande comportant des informations pour permettre à l'équipement de transport d'adapter sa vitesse.

L'équipement de transport peut être par exemple un équipement de transport utilisé pour le cheminement de produits manufacturés ou de matières ou d'objets dans un environnement industriel. L'équipement de transport peut aussi être un équipement de transport utilisé pour transporter des personnes, en particulier une remontée mécanique. Il est en général constitué d'un organe de défilement (tel qu'un câble ou un tapis roulant) auquel sont fixées des nacelles aptes chacune à contenir une ou plusieurs personnes ou objets. L'organe de défilement assure la circulation des nacelles sur le parcours entre un point de départ et un point d'arrivée. La vitesse de défilement de l'équipement de transport est la vitesse de l'organe de défilement dans son ensemble, celui-ci déterminant ainsi la vitesse de d'avancée de l'ensemble des nacelles. On souligne ici que dans la mesure où les nacelles peuvent circuler à vide ou avec un chargement plus ou moins complet, la vitesse de transport des personnes, c'est-à-dire le flux de personnes ou d'objets qui sont évacués du point de départ, n'est pas directement lié à la vitesse de l'équipement.

Le dispositif étant un dispositif auxiliaire de l'équipement de transport et en particulier de son système de contrôle et de régulation, il est simple à mettre en oeuvre et ne nécessite pas de modifications substantielles de l'équipement de transport. En particulier, le système de contrôle des équipements existant n'étant pas modifié, le dispositif selon l'invention n'a pas d'impact sur les contraintes de sécurité de l'équipement de transport, ni sur les visites d'entretien, ou encore sur les performances de ce dernier. Le système de sécurité de l'équipement de transport, agissant par exemple sur le freinage d'urgence en cas de problème, sur l'arrêt pour cause de vent risquant de provoquer un déraillement, n'est pas affecté. Le dispositif selon l'invention ne conditionne pas le fonctionnement de l'équipement, mais permet de lui fournir les informations nécessaires pour le réguler.

En outre, l'utilisation du dispositif selon l'invention permet de réaliser des économies substantielles par rapport à une régulation manuelle de l'équipement de transport, grâce notamment aux économies d'énergie que l'invention permet de réaliser. En outre du fait de l'optimisation de la vitesse de l'équipement de transport en fonction d'une consigne, des économies significatives peuvent être réalisées en limitant l'usure des pièces (bandages caoutchouc, roulements, motorisation moins consommatrice en énergie, car moins de variations brutales), ce qui se traduit typiquement par un gain en énergie électrique de 15-18 % et une économie sur la mécanique de l'ordre de 10 %.

L'interface d'entrée peut permettre de recevoir des consignes TARG relatives à l'équipement de transport et son exploitation. L'interface de sortie est par exemple adaptée à être couplée avec un module externe d'un équipement de transport. L'interface de sortie peut être une carte Ethernet, adaptée à être couplée à un réseau filaire ou sans fil WiFi, afin de permettre une interconnexion avec Internet, ou encore un réseau interne. L'interface de sortie comprend par exemple un boîtier de connexion, ainsi que des liaisons filaires adaptables au module externe. Typiquement, le module externe est un automatisme muni d'un dispositif de variation de vitesse pour machine à courant continu ou alternatif synchrone ou asynchrone.

Les moyens de calcul peuvent comprendre au moins un processeur, des interfaces et des unités de stockage pour stocker et exécuter un programme d'ordinateur, et/ou un circuit intégré dans lequel un programme est incorporé. La vérification du respect de la consigne peut être faite sensiblement de manière continue, ou périodiquement, par exemple toutes les secondes. L'émission des commandes peut être réalisée sensiblement de manière continue, périodiquement, par exemple toutes les cinq secondes, ou encore seulement lorsque l'écart entre la consigne et l'information dépasse un seuil déterminé. Le message de commande peut comporter une indication de la vitesse optimale à atteindre, des consignes pour augmenter/diminuer/garder stable la vitesse de l'équipement, des indications physiques sur un paramètre influençant la vitesse de l'équipement, ou une combinaison de ces indications ou consignes. Les commandes sont adaptées à être traitées par le module externe lorsque l'équipement de transport est en cours de fonctionnement.

Dans un mode de réalisation, le dispositif automatisé comporte une interface utilisateur permettant d'afficher, présenter ou transmettre des informations relatives au fonctionnement du module automatisé, et/ou de recevoir des informations fournies par un utilisateur. L'interface utilisateur peut comporter un écran tactile, pour afficher par exemple des paramètres comme la vitesse de l'équipement de transport, l'état du module automatisé, ou encore les consignes actuellement appliquées. L'interface utilisateur peut aussi comporter des moyens de saisie comme un clavier ou un écran tactile, pour permettre à un utilisateur de paramétrer le module automatisé, adapter ou modifier les consignes ou encore saisir des informations relatives à l'équipement de transport et son exploitation. Elle peut en outre être déportée et comporter des moyens de connexion adaptés pour envoyer à et/ou recevoir d'une autre interface utilisateur déportée les informations EXTINF. Les informations relatives à l'équipement de transport, ainsi que les consignes, peuvent être reçues par l'interface d'entrée, préconfigurées, stockées dans le module automatisé ou encore saisies par un utilisateur sur l'interface utilisateur.

Ladite au moins une consigne peut être relative à un nombre de personnes et/ou d'objets transportés par unité de temps. Elle peut aussi être relative aux coûts engendrés par l'exploitation de l'équipement de transport. Elle peut également être fonction du temps qu'il fait, et/ou de l'information relative à l'équipement de transport, et/ou d'une information relative à l'environnement de l'équipement de transport reçue ou obtenue par l'interface d'entrée.

L'information relative à l'équipement de transport est obtenue par exemple à partir de données statistiques relatives à l'exploitation de l'équipement de transport. Par exemple, elle peut comprendre au moins une, ou une combinaison des informations suivantes : une moyenne sur une période donnée du nombre de personnes ou d'objets transportés par jour ou par heure, une moyenne - sur une période donnée et pour des conditions météorologiques données - du nombre de personnes ou d'objets transportés, la consommation électrique moyenne sur une période donnée de l'équipement de transport, une vitesse moyenne sur une période donnée de déplacement des objets et/ou des personnes.

L'information relative à l'équipement de transport peut être obtenue à partir de et/ou en mesurant un paramètre de l'équipement de transport. Elle comprend tout d'abord une information se rapportant à un nombre de personnes et/ou d'objets transportés ou à transporter. Ce nombre peut être fourni par unité de temps, ou pour une plage de temps donnée ou à un instant donné, et peut être basé sur une mesure ou encore sur une estimation faite durant une période déterminée ou à un moment de référence donné.

L'information comprend avantageusement d'autres informations. Par exemple, elle peut comprendre au moins une, ou une combinaison des informations suivantes : la vitesse mesurée instantanée ou moyenne sur une période donnée de déplacement des objets et/ou des personnes, la consommation électrique mesurée instantanée ou moyenne sur une période donnée de l'équipement de transport, etc. Elle peut aussi être relative à une vitesse, moyenne ou instantanée, de déplacement des objets et/ou des personnes transportés par l'équipement de transport.

L'information relative à l'équipement de transport peut encore être relative à un nombre par unité de temps de personnes et/ou d'objets transportés ou à transporter. Par exemple, elle peut comprendre au moins une, ou une combinaison des informations suivantes : une mesure de la fréquentation sur une période donnée à un point déterminé de l'équipement de transport, une estimation du nombre de personnes ou d'objets souhaitant emprunter l'équipement de transport à un instant donné ou sur une période donnée, une estimation et/ou une mesure instantanée ou sur une période donnée, du nombre de personnes ou d'objets transportés par l'équipement de transport. L'unité de temps peut être une période de référence unique ou répétée, plus ou moins longue.

L'information relative à l'équipement de transport peut encore être relative aux coûts engendrés par l'exploitation de l'équipement de transport.

La présente invention permet ainsi la régulation de la vitesse d'un équipement de transport, fondée sur un ensemble d'exigences, dont l'une se rapporte au nombre de passagers ou d'objets qui doivent être transportés d'un point à un autre. Cette exigence est en lien avec la réalisation d'un indice de satisfaction élevé pour les passagers qui n'attendent pas longuement avant d'être pris en charge par l'équipement. C'est également un avantage pour le gestionnaire d'un équipement de transport d'objets, qui optimisera les déplacements en fonction du nombre de colis à déplacer.

Dans un mode de réalisation intéressant, le dispositif comporte en outre un module d'auto-surveillance apte à détecter une anomalie de fonctionnement et, le cas échéant, à désactiver l'envoi du message de commande. La sécurité est donc renforcée et la maintenance du dispositif en est facilitée.

Selon un deuxième aspect, l'invention se rapporte à une remontée mécanique pour transporter des passagers d'une aire de départ jusqu'à une aire d'arrivée. Elle comporte :

- des moyens de collecte d'informations relatives à la remontée mécanique, dont l'une se rapporte à un nombre de personnes et/ou d'objets transportés ou à transporter ;
- un dispositif autonome selon le premier aspect, dont l'interface d'entrée est couplée aux moyens de collecte d'informations ;
- un régulateur de vitesse, couplé à l'interface de sortie du dispositif autonome, et configuré de manière à contrôler la vitesse de transport des passagers en tenant compte des informations reçues depuis l'interface de sortie du dispositif autonome.

La vitesse de transport des passagers s'entend de la vitesse de déplacement d'une nacelle. Les moyens de collecte d'informations peuvent comporter des moyens de calcul ou d'évaluation du nombre de passagers à transporter par unité de temps.

Selon un troisième aspect, l'invention se rapporte à un réseau comportant au moins une première et une deuxième remontées mécaniques selon le deuxième aspect. Le réseau comporte des moyens de collecte générale d'au moins une première information relative à un premier nombre de personnes transportées par la première remontée mécanique et d'au moins une deuxième information relative à un deuxième nombre de personnes transportées par la deuxième remontée mécanique. Le réseau comporte encore un dispositif autonome réseau comportant un module automatisé réseau, le module automatisé réseau étant couplé aux moyens de collecte générale et comprenant des moyens de calcul réseau configurés de sorte à :

- recevoir et/ou obtenir la première et la deuxième informations ;
- comparer la première et la deuxième informations ;
- en fonction du résultat de la comparaison, émettre un message de commande CMD comportant des informations pour permettre à la première ou à la deuxième remontée mécanique d'adapter sa vitesse.

Outre les avantages précités, le réseau permet d'optimiser la régulation d'une pluralité d'équipements de transport simultanément, et donc de gérer globalement le réseau. En outre, le réseau permet d'agréger les informations relatives au nombre de personnes transportées pour chaque remontée mécanique et d'identifier les problèmes éventuels à l'échelle du réseau. Ainsi, le réseau permet encore de diagnostiquer des problèmes d'équipement de la station en identifiant les goulets d'étranglement dans le réseau des remontées, le sur- ou sous-équipement de la station. Les données étant agrégées globalement pour le réseau, les informations sur le nombre de personnes transportées peuvent être collectées globalement, alors que ce relevé est aujourd'hui fait manuellement pour chaque remontée individuellement. Ces informations peuvent être également exploitées pour la maintenance après le transport d'un nombre déterminé de personnes ou encore pour évaluer un coût pour des contrats d'assurances en fonction du nombre de personnes transportées. Un relevé automatique pour le nombre de personnes transportées par remontée et pour l'ensemble des remontées du réseau peut ainsi être programmé, envoyé, enregistré.

Selon un quatrième aspect, l'invention se rapporte à une méthode de régulation d'une vitesse d'au moins un équipement de transport d'objets et/ou de personnes, comportant les étapes suivantes :

- une première étape de réception et/ou d'obtention d'au moins une information relative à l'équipement de transport, dont l'une se rapporte à un nombre de personnes et/ou d'objets transportés ou à transporter ;
- une deuxième étape de vérification du respect d'au moins une consigne par ladite information relative à l'équipement ;
- si ladite information relative à l'équipement ne respecte pas ladite consigne, une troisième étape d'émission d'un message de commande comportant des informations pour permettre à l'équipement de transport d'adapter sa vitesse.

En particulier, le dispositif selon le premier ou le deuxième aspect peut être utilisé pour mettre en oeuvre ladite méthode.

Dans un mode de réalisation, au cours de la première étape, la vitesse instantanée V de l'équipement de transport peut être mesurée ou calculée, ainsi que le nombre de véhicules composant l'équipement de transport, ou la cadence des véhicules, ou des données spécifiques et statistiques comme la consommation d'énergie actuelle, la consommation électrique moyenne horaire, etc. Le nombre de personnes ou d'objets transportés est alors déterminé, ainsi qu'un taux d'occupation moyen des véhicules ou de l'équipement de transport. Au cours de la deuxième étape, le taux d'occupation moyen des véhicules est comparé à une consigne définissant une plage de valeurs acceptables pour le taux d'occupation moyen. Au cours de la troisième étape,

- si le taux d'occupation moyen est compris dans la plage, aucune commande n'est émise ;
- si le taux d'occupation moyen n'est pas compris dans la plage et est supérieur à la borne supérieure, une commande d'augmentation de la vitesse est émise ;
- si le taux d'occupation moyen n'est pas compris dans la plage et est inférieur à la borne inférieure, une commande de réduction de la vitesse est émise.

D'autres contraintes peuvent être prises en compte, par exemple, le respect d'une vitesse minimale ou maximale de l'équipement de transport.

Dans un mode de réalisation, au cours de la première étape, des informations pour déterminer un coût d'exploitation sont également recueillies, par exemple des données de vente de forfaits. Au cours de la deuxième étape, le coût d'exploitation est comparé à un seuil de rentabilité calculé, par exemple à partir de données historiques. Au cours de la troisième étape,

- si le coût d'exploitation est inférieur au seuil de rentabilité, une commande CMD de réduction de la vitesse est émise ;
- si le coût d'exploitation est supérieur au seuil de rentabilité, une commande CMD d'augmentation de la vitesse est émise.

Selon un cinquième aspect, l'invention se rapporte à une méthode de régulation de la vitesse d'au moins une première et une deuxième remontées mécaniques selon le troisième aspect. Elle comporte les étapes suivantes :

- une étape de collecte d'au moins une première information relative à un premier nombre de personnes transportées par la première remontée mécanique et d'au moins une deuxième information relative à un deuxième nombre de personnes transportées par la deuxième remontée mécanique ;
- une étape de comparaison de la première et de la deuxième informations ;
- en fonction du résultat de la comparaison, une étape d'émission d'un message de commande comportant des informations pour permettre à la première ou à la deuxième remontée mécanique d'adapter sa vitesse.

Selon un sixième aspect, l'invention se rapporte à un programme d'ordinateur comportant des instructions pour l'exécution des étapes de la méthode selon le quatrième aspect, ou pour l'exécution des étapes de la méthode selon le cinquième aspect, lorsque ledit programme est exécuté par un processeur.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un septième aspect, l'invention se rapporte à un support d'enregistrement lisible par un ordinateur sur lequel est enregistré un programme d'ordinateur comprenant des instructions pour l'exécution des étapes de la méthode selon le quatrième aspect ou pour l'exécution des étapes de la méthode selon le cinquième aspect.

Le support d'informations peut être n'importe quelle entité ou n'importe quel dispositif capable de stocker le programme. Par exemple, le support peut comporter un moyen de stockage, tel qu'une ROM, par exemple un CD-ROM ou une ROM de circuit microélectronique, ou encore un moyen d'enregistrement magnétique, par exemple une disquette ou un disque dur. D'autre part, le support d'informations peut être un support transmissible tel qu'un signal électrique ou optique, qui peut être acheminé par un câble électrique ou optique, par radio ou par d'autres moyens. Le programme selon l'invention peut être en particulier téléchargé sur un réseau Internet. Alternativement, le support d'informations peut être un circuit intégré dans lequel le programme est incorporé, le circuit étant adapté pour exécuter ou pour être utilisé dans l'exécution du procédé en question.

Grâce aux différents aspects de la présente invention, il est désormais possible de réaliser une régulation de la vitesse d'un équipement de transport, avec une optimisation à la fois économique, technique et en terme de service rendu, prenant en compte les flux de personnes ou objets transportés ou à transporter à un moment donné.

**Brève description des figures**

D'autres particularités et avantages de la présente invention apparaîtront dans la description ci-après de modes de réalisation, en référence aux dessins annexés, dans lesquels :

- la figure 1 est un schéma bloc d'un dispositif automatisé, selon un mode de réalisation de l'invention, pour permettre la régulation de la vitesse de transport d'objets ou de personnes par un ou plusieurs équipements de transport ;
- la figure 2 est un schéma de principe d'une méthode automatisée, selon un mode de réalisation de l'invention, pour permettre la régulation de la vitesse de transport d'objets ou de personnes par un ou plusieurs équipements de transport, en fonction d'un objectif de remplissage ou d'occupation ;
- la figure 3 est un schéma de principe d'une méthode automatisée, selon un mode de réalisation de l'invention, pour permettre la régulation de la vitesse de transport d'objets ou de personnes par un ou plusieurs équipements de transport, en fonction d'un objectif de coût ;
- la figure 4 est un schéma bloc d'un réseau automatisé, selon un mode de réalisation de l'invention, de remontées mécaniques déployées dans une station de ski ;
- la figure 5 est un schéma de principe d'une méthode automatisée, selon un mode de réalisation de l'invention, pour permettre la régulation de la vitesse de personnes par un réseau automatisé selon l'invention.

**Description détaillée**

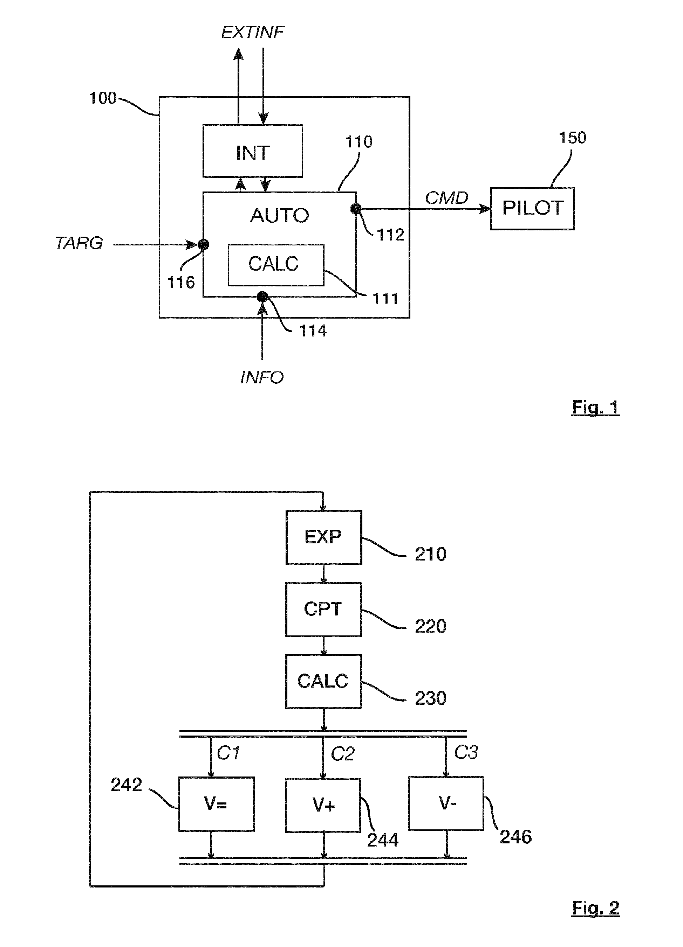

La figure 1 illustre par un schéma bloc un dispositif automatisé 100, selon un mode de réalisation de l'invention, pour permettre la régulation de la vitesse de transport d'objets ou de personnes par un ou plusieurs équipements de transport. Le dispositif automatisé 100 permet par exemple de réguler la vitesse d'une remontée mécanique, tout en optimisant la consommation énergétique et en assurant une gestion des flux efficaces des passagers. Le dispositif automatisé comporte un module automatisé 110 pourvu d'une interface de sortie 112 adaptée à être couplée avec un module externe 150 d'un équipement de transport. Le module automatisé 110 est un automate industriel programmable avec cartes d'entrée/sortie analogiques. L'interface de sortie 112 peut être une carte Ethernet, adaptée à être couplé à un réseau filaire ou sans fil WiFi, afin de permettre une interconnexion avec Internet, ou encore un réseau interne. Le dispositif automatisé 100 comporte en outre des moyens de calcul 111 qui, typiquement, comprennent au moins un processeur, des interfaces et des unités de stockage pour stocker et exécuter un programme d'ordinateur. Ils peuvent comprendre un circuit intégré dans lequel un programme est incorporé. Ils sont configurés de sorte à :

- recevoir et/ou obtenir, par une interface d'entrée 114, 116, au moins une information INFO relative à l'équipement de transport, dont l'une se rapporte à un nombre de personnes et/ou d'objets transportés ou à transporter ;
- vérifier si ladite information relative à l'équipement respecte au moins une consigne TARG ;
- si ladite information relative à l'équipement ne respecte pas ladite consigne, émettre sur l'interface de sortie, un message de commande CMD comportant des informations pour permettre à l'équipement de transport d'adapter sa vitesse.

La vérification du respect de la consigne TARG peut être faite sensiblement de manière continue, ou périodiquement, par exemple toutes les secondes. L'émission des commandes CMD peut être réalisée sensiblement de manière continue, périodiquement, par exemple toutes les 5 secondes, ou encore seulement lorsque l'écart entre la consigne TARG et l'information INFO dépasse un seuil déterminé. Le message de commande CMD peut comporter une indication de la vitesse optimale à atteindre, des consignes pour augmenter/diminuer/garder stable la vitesse de l'équipement, des indications physiques sur un paramètre influençant la vitesse de l'équipement, ou une combinaison de ces indications ou consignes. Les commandes sont traitées par le module externe 150 lorsque l'équipement de transport est en cours de fonctionnement. L'interface de sortie 112 comprend par exemple un boîtier de connexion, ainsi que des liaisons filaires adaptables au module externe 150 qui est typiquement, un automatisme muni d'un dispositif de variation de vitesse pour machine à courant continu ou alternatif synchrone ou asynchrone.

L'interface d'entrée permet de recevoir des informations INFO relatives à l'équipement de transport et à son exploitation. L'information relative à l'équipement de transport est obtenue par exemple à partir de et/ou en mesurant un paramètre de l'équipement de transport. Par exemple, elle comprend une combinaison des informations suivantes : la vitesse mesurée instantanée ou moyenne sur une période donnée de déplacement des objets et/ou des personnes, la consommation électrique mesurée instantanée ou moyenne sur une période donnée de l'équipement de transport, etc.

L'information relative à l'équipement de transport peut encore être relative à un nombre par unité de temps, de personnes et/ou d'objets transportés ou à transporter. Par exemple, elle comprend au moins une des informations suivantes : une mesure de la fréquentation sur une période donnée à un point déterminé de l'équipement de transport, une estimation du nombre de personnes ou d'objets souhaitant emprunter l'équipement de transport à un instant donné ou sur une période donnée, une estimation et/ou une mesure instantanée ou sur une période donnée, du nombre de personnes ou d'objets transportées par l'équipement de transport. L'information relative à l'équipement de transport peut aussi être relative à une vitesse, moyenne ou instantanée, de déplacement des objets et/ou des personnes transportés par l'équipement de transport.

L'information relative à l'équipement de transport peut être obtenue à partir de données statistiques relatives à l'exploitation de l'équipement de transport, relevées sur une période donnée, telles que : une moyenne du nombre de personnes ou d'objets transportés par jour ou par heure, une moyenne pour des conditions météorologiques déterminées du nombre de personnes ou d'objets transportés, la consommation électrique moyenne de l'équipement de transport, une vitesse moyenne de déplacement des objets et/ou des personnes. Elle peut encore être relative aux coûts engendrés par l'exploitation de l'équipement de transport.

L'interface d'entrée permet de recevoir des consignes TARG relatives à l'équipement de transport et son exploitation. Les consignes peuvent être relatives à un nombre de personnes et/ou d'objets transportés par unité de temps, aux coûts engendrés par l'exploitation de l'équipement de transport. Elles peuvent être fonction du temps qu'il fait, et/ou de l'information relative à l'équipement de transport, et/ou d'une information relative à l'environnement de l'équipement de transport reçue ou obtenue par l'interface d'entrée. Par exemple, les consignes TARG peuvent dépendre de paramètres externes comme le temps, les conditions météorologiques, ou autres. Elles peuvent être reçues, stockées localement et utilisées jusqu'à ce que de nouvelles consignes TARG reçues les remplacent. À titre d'exemple non limitatif, elles peuvent se rapporter à une occupation des véhicules minimum, une plage de vitesses de déplacement des véhicules, une consommation énergétique maximum, un débit de personnes transportées optimal, une plage de flux désirée, etc.

Le dispositif automatisé 100 comporte optionnellement une interface utilisateur 120 permettant d'afficher, présenter ou transmettre des informations relatives au fonctionnement du module automatisé 100, et de recevoir des informations EXTINF fournies par un utilisateur. L'interface utilisateur 120 peut comporter un écran tactile, pour afficher des paramètres tels que la vitesse de l'équipement de transport, l'état du module automatisé, ou les consignes TARG actuellement appliquées. Elle peut comporter des moyens de saisie comme un clavier ou un écran tactile, pour permettre à un utilisateur de paramétrer le module automatisé 110, d'adapter ou de modifier les consignes TARG ou encore de saisir des informations INFO relatives à l'équipement de transport et son exploitation. L'interface 120 peut être déportée et comporter des moyens de connexion pour envoyer à et/ou recevoir d'une autre interface utilisateur déportée les informations EXTINF. Typiquement, le dispositif automatisé 100 est inclus dans un boîtier mesurant environ 10 cm x 10 cm x 8 cm. Dans l'exemple d'une remontée mécanique, l'interface de sortie 112 peut être couplée à un bornier de la remontée mécanique, généralement localisé dans la cabane du perchiste.

Dans un mode de réalisation, le dispositif automatisé 100 est configuré de manière à émettre des commandes CMD de réduction ou d'augmentation de la vitesse à laquelle les objets ou les personnes sont transportés par l'équipement de transport. Le dispositif automatisé 100 utilise pour cela les informations INFO, mesurées sur l'équipement de transport ou propres à ce dernier, comme la capacité de l'installation, la vitesse actuelle d'exploitation, la distance de cheminement. Les informations INFO peuvent être reçues par la première interface 114, préconfigurées ou stockées dans le module automatisé 110, ou encore saisies par un utilisateur sur l'interface utilisateur 120. Le dispositif automatisé 100 prend en compte pour cela des consignes TARG, par exemple une consigne relative au coût d'exploitation, à une cadence de production, à une durée d'attente, ou à une gestion de flux sur un équipement de transport par rapport à d'autres équipements de transport à proximité. Les consignes TARG peuvent être reçues par la deuxième interface 116, préconfigurées ou stockées dans le module automatisé 110, ou encore saisies par un utilisateur sur l'interface utilisateur 120.

Le module automatisé 110 peut encore comporter un module d'auto-surveillance (non représenté sur les figures), configuré de sorte à détecter des anomalies de fonctionnement du dispositif automatisé 100 et désactiver l'envoi de commandes CMD de régulation de vitesse et/ou informer le module externe de la survenance d'une anomalie. Une méthode automatisée pour permettre la régulation de la vitesse de transport d'objets ou de personnes par un ou plusieurs équipements de transport, en fonction d'un objectif de remplissage ou d'occupation, selon un mode de réalisation de l'invention, est illustrée sur la figure 2. En particulier, le dispositif automatisé 110 décrit précédemment peut être utilisé pour mettre en oeuvre ladite méthode.

Dans une première étape 210, des données d'exploitation de l'équipement de transport sont collectées. Par exemple, la vitesse instantanée V de l'équipement de transport est mesurée ou calculée. D'autres données d'exploitation peuvent être collectées par exemple : le nombre de véhicules composant l'équipement de transport ; la cadence des véhicules ; des données spécifiques et statistiques comme la consommation d'énergie actuelle, la consommation électrique moyenne horaire, etc.

Puis dans une deuxième étape 220, le nombre de personnes ou d'objets transportés est déterminé. Dans le cas du transport de personnes, un compteur du nombre de passagers actuellement transportés est consulté afin de connaître le nombre de personnes utilisant les véhicules composant l'équipement de transport qui sont en circulation. Par exemple, il est possible de compter le nombre de personnes ayant passé un portillon localisé à un point de départ de l'équipement de transport.

Dans une troisième étape 230, un taux d'occupation moyen TOCC des véhicules ou de l'équipement de transport est calculé puis comparé à une consigne COPT définissant une plage [L1...L2] de valeurs acceptables pour le taux d'occupation moyen TOCC. Par exemple, le taux d'occupation moyen TOCC peut être déterminé en appliquant la formule suivante :

$$TOCC = D = \frac{C \times V \times 3600}{DIST}$$

Avec :

- D, le nombre de personnes ou d'objets transportés par seconde ;
- C, la capacité de transport, en nombre de personnes ou d'objets, de l'équipement de transport ;
- V, la vitesse de déplacement, en mètre par seconde, des personnes ou objets ;
- DIST, la distance entre les véhicules, en mètres.

Si le taux d'occupation moyen TOCC est compris dans la plage [L1...L2], aucune commande n'est émise (étape 242). Si le taux d'occupation moyen TOCC n'est pas compris dans la plage [L1...L2] et est supérieur à la borne supérieure L2, une commande CMD d'augmentation de la vitesse à laquelle les objets ou les personnes sont transportés par l'équipement de transport est émise dans une étape 244. Si le taux d'occupation moyen TOCC n'est compris dans la plage [L1...L2] et est inférieur à la borne inférieure L1, une commande CMD de réduction de la vitesse à laquelle les objets ou les personnes sont transportés par l'équipement de transport est émise dans une étape 246.

D'autres contraintes peuvent être prises en compte. Par exemple, au cours de l'étape 244, une commande CMD d'augmentation de la vitesse à laquelle les objets ou les personnes sont transportés par l'équipement de transport est émise seulement si la vitesse de l'équipement de transport est inférieure ou égale à une vitesse limite Vmax. La vitesse limite Vmax peut être fixée selon les souhaits de l'utilisateur, et dans des limites de sécurité mécanique fournies par le constructeur de l'équipement de transport ainsi que les normes de sécurité des personnes ou objets transportés en vigueur. De même, au cours de l'étape 246, une commande CMD de réduction de la vitesse à laquelle les objets ou les personnes sont transportés par l'équipement de transport est émise seulement si la vitesse de l'équipement de transport reste, une fois la commande CMD prise en compte par l'équipement de transport, supérieure ou égale à une vitesse minimale Vmin.

Un exemple chiffré pour une remontée mécanique va maintenant être décrit. Pour une remontée mécanique, Vmin est typiquement égale à 3 m/s, Vmax à 5 m/s. La remontée mécanique comprend 10 véhicules adaptés au transport de 4 passagers. L'occupation maximale pour un cycle de transport complet correspond donc à 40 personnes. Si, pour un cycle donné, au moins 35 personnes ont été transportées, une commande CMD d'augmentation de la vitesse est émise au cours de l'étape 244. Si, pour un cycle donné, 25 personnes ou moins ont été transportées, une commande CMD de réduction de la vitesse est émise au cours de l'étape 246. Si, pour un cycle donné, au moins 26 personnes, mais moins de 35 ont été transportées, aucune commande CMD n'est émise (étape 242).

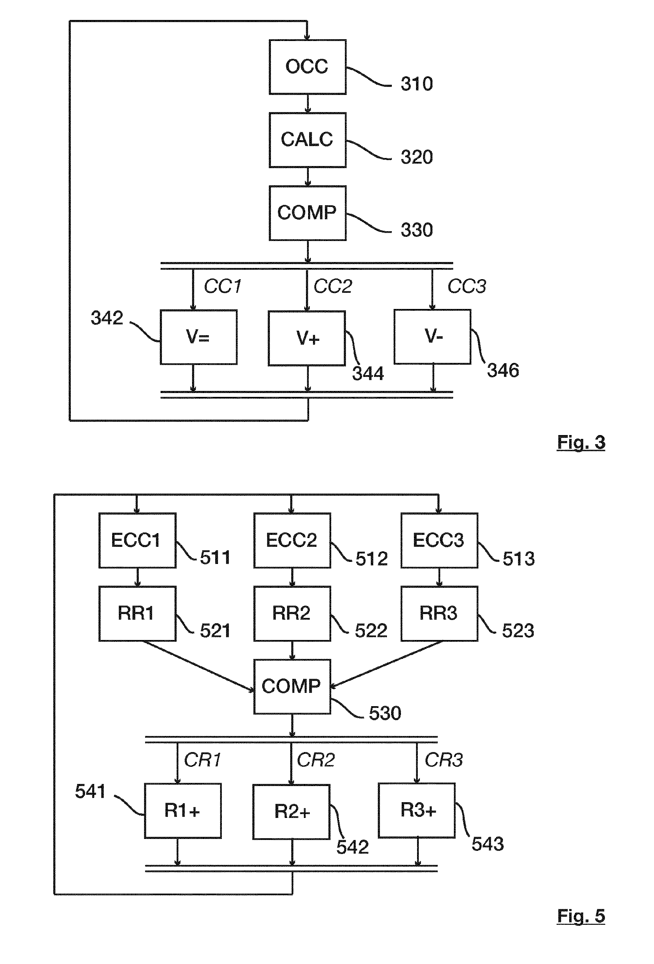

Une méthode automatisée pour permettre la régulation de la vitesse de transport d'objets ou de personnes par un ou plusieurs équipements de transport, en fonction d'un objectif de coût, selon un mode de réalisation de l'invention, est illustrée sur la figure 3. En particulier, le dispositif automatisé 110 peut être utilisé pour mettre en oeuvre ladite méthode. Cette méthode peut être combinée avec la méthode automatisée pour permettre la régulation de la vitesse en fonction d'un objectif de remplissage ou d'occupation, illustrée sur la figure 2.

Dans une première étape 310, des données d'exploitation de l'équipement de transport sont collectées, et le nombre de personnes ou d'objets transportés est déterminé. Un coût instantané CI est alors déterminé en fonction des données recueillies. Par exemple, le coût instantané CI peut être calculé à partir de l'affluence du jour et/ou des recettes de la vente de forfaits. Puis dans une deuxième étape 320, un seuil de rentabilité SRENT est calculé. Par exemple dans le cas d'une station de ski, le seuil de rentabilité SRENT est calculé en rapportant le coût d'exploitation par remontée à la vente de forfaits. Ce seuil de rentabilité SRENT peut être calculé pour une durée donnée, par exemple pour une journée ou pour une heure, et mis à jour en conséquence. Des données historiques, la moyenne de l'année précédente par exemple, peuvent être utilisées pour ce calcul. Le coût d'exploitation par remontée peut être déterminé, en déterminant les coûts totaux d'exploitation :

- à l'aide des données des années précédentes, notamment en prenant en compte le nombre de jours de fonctionnement de la remontée et le nombre de skieurs ayant emprunté la remontée ; et/ou,
- en utilisant les données de l'exploitation instantanée, comme le nombre de forfaits sur une période donnée, ainsi qu'en tenant compte du nombre de places disponible pour chaque remontée de la station et par unité de temps ; et/ou,
- en prenant en compte la consommation d'énergie, notamment en proportion de la puissance délivrée ou de la vitesse des remontées.

Par exemple, le seuil de rentabilité SRENT peut être un seuil de coût maximum Cmax, valable pour une journée donnée.

Dans une troisième étape 330, le coût instantané CI est comparé au seuil de rentabilité SRENT est comparé. Si le coût instantané CI est inférieur au seuil de rentabilité SRENT, une commande CMD de réduction de la vitesse est émise dans une étape 346. Si le coût instantané CI est supérieur au seuil de rentabilité SRENT, une commande CMD d'augmentation de la vitesse est émise dans une étape 344. Dans tous les autres cas, aucune commande CMD n'est émise (étape 342).

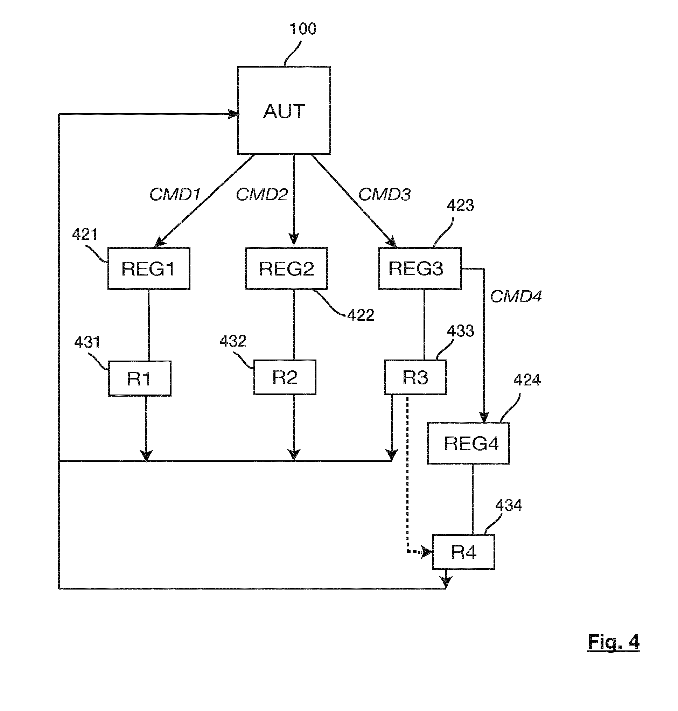

La figure 4 est un schéma bloc d'un réseau automatisé, selon un mode de réalisation de l'invention, de remontées mécaniques, déployées dans une station de ski. Le réseau automatisé comprend quatre remontées mécaniques : trois remontées mécaniques 431, 432, 433 acheminant des passagers respectivement sur trois segments indépendants R1, R2, R3 et une remontée mécanique 434 acheminant des passagers sur un segment R4 prenant la suite du segment R3. La remontée mécanique 434 est donc placée de manière à prendre la suite de la remontée mécanique 433 pour transporter sur le segment R4 les passagers ayant emprunté le segment R3. Les remontées mécaniques 431, 432, 433, 434 sont respectivement régulées en vitesse par des régulateurs 421, 422, 423, 424. La remontée mécanique 433 peut être déclarée maître relativement à la remontée mécanique 434 dite esclave, au sens où la vitesse de cette dernière est alors choisie en fonction de la vitesse de la remontée mécanique 433 maître, en général de sorte à être sensiblement égale. Dans ce cas, le régulateur 424 est configuré de sorte à réguler la vitesse de la remontée mécanique 434 pour être sensiblement égale à la vitesse de la remontée mécanique 433. Le régulateur 424 est donc asservi au régulateur 423. Le réseau comprend un contrôleur qui collectent les informations INFO relatives aux différentes remontées mécaniques 431, 432, 433, 434, et permet de collecter les consignes TARG ainsi que les données saisies par un utilisateur. Le réseau comporte encore un dispositif automatisé 100 selon un mode de réalisation de l'invention, adapté à émettre des commandes de régulation de vitesse. Le dispositif automatisé 100 est couplé aux régulateurs 421, 422, 423, 424. Un réseau de communication, par exemple de type Ethernet, filaire et/ou sans fil, peut être déployé de sorte à interconnecté le dispositif automatisé 100, les régulateurs 421, 422, 423, 424, et les remontées mécaniques 431, 432, 433, 434, afin de permettre sur l'ensemble d'une station une gestion globale. Il est en outre également possible de n'interconnecter au réseau de communication que les dispositifs associés aux remontées mécaniques indépendantes 431, 432, et aux remontées mécaniques maîtres 433. Des cellules photoélectriques peuvent être positionnées pour chaque remontée mécanique de manière à permettre la détection et le comptage du passage d'un véhicule de ladite remontée et des skieurs à chaque portillon de départ. Les régulateurs sont par exemple des variateurs configurés pour piloter le moteur de la remontée mécanique correspondante, et à l'entrée du dispositif qui commande la vitesse du câble dans le cas de paniers débrayables.

Parmi les informations recueillies par le dispositif automatisé figure le nombre de passagers souhaitant emprunter les remontées mécaniques. Le comptage de l'affluence peut être fait par comptage des passagers passant des portiques d'accès aux véhicules des remontées mécaniques, par prévision à l'aide de données statistiques, ou encore par extrapolation en fonction des données de ventes du jour, par exemple en fonction du nombre de forfaits vendus pour accéder aux pistes desservies par les remontées mécaniques du réseau. Par exemple, à partir des statistiques relatives aux jours précédents ou aux jours correspondants des saisons précédentes, il est possible de savoir que pour 1000 forfaits vendus par jour, les skieurs vont utiliser un nombre donné NB de fois à chaque remontée, sur une durée d'ouverture de 8 heures. Par exemple, pour 1000 forfaits journaliers vendus, pour la remontée 431, au moins 5000 passages peuvent être prévus, pour la remontée 432, au moins 3000 passages, pour la remontée 433, au moins 4000 passages. Ainsi, sur une période de 8 heures, un total d'au moins 12 000 passages est prévu, soit 1500 passages/heure. Pour réguler la vitesse des différentes remontées mécaniques du réseau, le dispositif automatisé 100 peut donc obtenir cette information et réguler la vitesse de chacune des remontées mécaniques en conséquence.

Une méthode automatisée de régulation de la vitesse de personnes par un réseau selon l'invention est illustrée sur la figure 5. En particulier, le réseau automatisé illustré à la figure 4, peut être utilisé pour mettre en oeuvre ladite méthode.

Pour chaque remontée mécanique indépendante ou maître du réseau, au cours des étapes 511, 512, 513, des données d'exploitation sont collectées. Le nombre de personnes transportées est déterminé et le taux d'occupation est calculé. Des données relatives au coût instantané CI, pour chaque remontée mécanique indépendante ou maître du réseau, peuvent également être recueillies et prises en compte. Pour les remontées mécaniques indépendantes ou maîtres, il est possible de déterminer le nombre de personnes transportées, en effectuant un comptage pour un cycle correspondant à un nombre de véhicules prédéterminés, par exemple 20 à 30 véhicules par cycle de comptage, pour réduire notamment la fréquence des régulations. Puis, au cours des étapes 521, 522, 523, la vitesse de chaque remontée mécanique indépendante ou maître du réseau est régulée, en fonction des données collectées et calculées au cours des étapes 511, 512, 513. Le paramétrage de la régulation se fait en fonction des caractéristiques et des possibilités de chaque remontée mécanique.

Dans une étape 530, le flux de personne ou le taux d'occupation de chaque remontée mécanique indépendante ou maître du réseau est comparé aux taux d'occupation des autres remontées mécaniques indépendantes ou maîtres. Si le taux d'occupation de la remontée mécanique 431 est inférieure aux taux d'occupation des remontées mécaniques 432 et 433, alors au cours d'une étape 541, la vitesse de la remontée mécanique 431 est réduite, la vitesse des remontées mécaniques 432 et 433 restant inchangée. Si le taux d'occupation de la remontée mécanique 432 est inférieure aux taux d'occupation des remontées mécaniques 431 et 433, alors au cours d'une étape 542, la vitesse de la remontée mécanique 432 est réduite, la vitesse des remontées mécaniques 431 et 433 restant inchangée. Si le taux d'occupation de la remontée mécanique 433 est inférieure aux taux d'occupation des remontées mécaniques 431 et 432, alors au cours d'une étape 543, la vitesse de la remontée mécanique 433 est réduite, la vitesse des remontées mécaniques 431 et 432 restant inchangée. Au cours des étapes 541, 542, 543, il est également possible d'appliquer les règles suivantes :

- La vitesse de la remontée mécanique 431 est maintenue stable, lorsque la vitesse de la remontée mécanique 432 et de la remontée mécanique 433 diminuent ;
- La vitesse de la remontée mécanique 432 est maintenue stable, lorsque la vitesse de la remontée mécanique 431 et de la remontée mécanique 433 diminuent ;
- La vitesse de la remontée mécanique 433 est maintenue stable, lorsque la vitesse de la remontée mécanique 431 et de la remontée mécanique 432 diminuent.

## Revendications

1. Dispositif adapté pour permettre une régulation d'une vitesse d'au moins un équipement de transport d'objets et/ou de personnes, caractérisé en ce qu'il comporte un module automatisé (110) comprenant des moyens de calcul (111), ainsi qu'une interface d'entrée (114) et une interface de sortie (112) adaptées à être couplées à l'équipement de transport ; les moyens de calculs étant configurés de sorte à :

   - recevoir et/ou obtenir, par l'interface d'entrée, au moins une information (INFO) relative à l'équipement de transport, dont l'une se rapporte à un nombre de personnes et/ou d'objets transportés ou à transporter ;
   - vérifier si ladite information relative à l'équipement respecte au moins une consigne (TARG) ;
   - si ladite information relative à l'équipement ne respecte pas ladite consigne, émettre sur l'interface de sortie, un message de commande (CMD) comportant des informations pour permettre à l'équipement de transport d'adapter sa vitesse.

2. Dispositif selon la revendication 1, **caractérisé en ce que** ladite au moins une consigne (TARG) est relative à un nombre de personnes et/ou d'objets transportés par unité de temps.

3. Dispositif selon l'une quelconque des revendications 1 à 2, **caractérisé en ce que** ladite au moins une consigne (TARG) est relative aux coûts engendrés par l'exploitation de l'équipement de transport.

4. Dispositif selon l'une quelconque des revendications 1 à 3, **caractérisé en ce que** ladite au moins une consigne (TARG) est fonction du temps, et/ou de l'information (INFO) relative à l'équipement de transport, et/ou d'une information relative à l'environnement de l'équipement de transport reçue ou obtenue par l'interface d'entrée (114).

5. Dispositif selon l'une quelconque des revendications 1 à 4, caractérisé en ce qu'une information (INFO) relative à l'équipement de transport est obtenue à partir de données statistiques relatives à l'exploitation de l'équipement de transport et/ou en mesurant un paramètre de l'équipement de transport.

6. Dispositif selon l'une quelconque des revendications 1 à 5, caractérisé en ce qu'une information (INFO) relative à l'équipement de transport est relative à une vitesse, moyenne ou instantanée, de déplacement des objets et/ou des personnes transportés par l'équipement de transport.

7. Dispositif selon l'une quelconque des revendications 1 à 6, caractérisé en ce qu'une information (INFO) relative à l'équipement de transport est relative à un nombre par unité de temps de personnes et/ou d'objets transportés ou à transporter.

8. Dispositif selon l'une quelconque des revendications 1 à 7, caractérisé en ce qu'une information (INFO) relative à l'équipement de transport est relative aux coûts engendrés par l'exploitation de l'équipement de transport.

9. Dispositif selon l'une quelconque des revendications 1 à 8, caractérisé en ce qu'il comporte en outre un module d'auto-surveillance apte à détecter une anomalie de fonctionnement et, le cas échéant, à désactiver l'envoi du message de commande.

10. Remontée mécanique (431, 432, 433, 434) pour transporter des passagers d'une aire de départ jusqu'à une aire d'arrivée, caractérisé en ce qu'elle comporte :

   - des moyens de collecte d'informations relatives à la remontée mécanique, dont l'une se rapporte à un nombre de personnes et/ou d'objets transportés ou à transporter ;
   - un dispositif autonome selon l'une quelconque des revendications 1 à 9, dont l'interface d'entrée est couplée aux moyens de collecte d'informations ;
   - un régulateur de vitesse (421, 422, 423, 424), couplé à l'interface de sortie du dispositif autonome, et configuré de manière à contrôler la vitesse de transport des passagers, en prenant compte des informations reçues depuis l'interface de sortie du dispositif autonome.

11. Réseau comportant au moins une première et une deuxième remontées mécaniques selon la revendication 10, caractérisé en ce qu'il comporte :

   - des moyens de collecte générale d'au moins une première information relative à un premier nombre de personnes transportées par la première remontée mécanique et d'au moins une deuxième information relative à un deuxième nombre de personnes transportées par la deuxième remontée mécanique ;
   - un dispositif autonome réseau comportant un module automatisé réseau, le module automatisé réseau étant couplé aux moyens de collecte générale et comprenant des moyens de calcul réseau configurés de sorte à :
   - recevoir et/ou obtenir la première et la deuxième informations ;
   - comparer la première et la deuxième informations ;
   - en fonction du résultat de la comparaison, émettre un message de commande (CMD) comportant des informations pour permettre à la première ou à la deuxième remontée mécanique d'adapter sa vitesse.

12. Méthode de régulation d'une vitesse d'au moins un équipement de transport d'objets et/ou de personnes, caractérisé en ce qu'elle comporte les étapes suivantes :

   - une première étape (210, 220 ; 310) de réception et/ou d'obtention d'au moins une information (INFO) relative à l'équipement de transport dont l'une se rapporte à un nombre de personnes et/ou d'objets transportés ou à transporter ;
   - une deuxième étape (230 ; 320, 330) de vérification du respect d'au moins une consigne (TARG) par ladite information relative à l'équipement ;
   - si ladite information relative à l'équipement ne respecte pas ladite consigne, une troisième étape (242, 244, 246 ; 342, 344, 346) d'émission d'un message de commande (CMD) comportant des informations pour permettre à l'équipement de transport d'adapter sa vitesse.

13. Méthode de régulation de la vitesse d'au moins une première et une deuxième remontée mécanique selon la revendication 10, caractérisé en ce qu'elle comporte les étapes suivantes :

   - une étape de collecte (511, 512, 513) d'au moins une première information relative à un premier nombre de personnes transportées par la première remontée mécanique et d'au moins une deuxième information relative à un deuxième nombre de personnes transportées par la deuxième remontée mécanique ;
   - une étape de comparaison (521, 522, 523) de la première et de la deuxième information ;
   - en fonction du résultat de la comparaison, une étape d'émission (541, 542, 543) d'un message de commande (CMD) comportant des informations pour permettre à la première ou à la deuxième remontée mécanique d'adapter sa vitesse.

14. Programme d'ordinateur comportant des instructions pour l'exécution des étapes de la méthode selon la revendication 12 ou pour l'exécution des étapes de la méthode selon la revendication 13, lorsque ledit programme est exécuté par un processeur.

15. Support d'enregistrement lisible par un ordinateur sur lequel est enregistré un programme d'ordinateur

**EP 2 803 550 A1**

comprenant des instructions pour l'exécution des étapes de la méthode selon la revendication 12 ou pour l'exécution des étapes de la méthode selon la revendication 13.

**Fig. 1**

**Fig. 2**

Fig. 3

Fig. 5

Fig. 4

# EP 2 803 550 A1

Europäisches
Patentamt

European
Patent Office

Office européen
des brevets

**RAPPORT DE RECHERCHE EUROPEENNE**

Numéro de la demande

EP 14 16 8325

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (IPC) |
| X | EP 2 233 400 A1 (OPM S P A [IT] CARLE & MONTANARI OPM S P A [IT]) 29 septembre 2010 (2010-09-29) * alinéa [0011] - alinéa [0041]; figure 1 * | 1-15 | INV. B61B7/00 |
| X | US 2010/018434 A1 (MORITZHUBER JOHANNES [AT] ET AL) 28 janvier 2010 (2010-01-28) * colonne 0008 - colonne 0032; figure 1 * | 1-15 | |
| | | | DOMAINES TECHNIQUES RECHERCHES (IPC) B61B G05B |

Le présent rapport a été établi pour toutes les revendications

| Lieu de la recherche | Date d'achèvement de la recherche | Examinateur |
|---|---|---|
| La Haye | 24 juin 2014 | Hauser, Leon |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

16

**ANNEXE AU RAPPORT DE RECHERCHE EUROPEENNE
RELATIF A LA DEMANDE DE BREVET EUROPEEN NO.**

EP 14 16 8325

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-06-2014

| Document brevet cité au rapport de recherche | Date de publication | Membre(s) de la famille de brevet(s) | Date de publication |
|---|---|---|---|
| EP 2233400 A1 | 29-09-2010 | AUCUN | |
| US 2010018434 A1 | 28-01-2010 | AT 518714 T | 15-08-2011 |
| | | AU 2008246212 A1 | 11-02-2010 |
| | | CA 2645389 A1 | 24-01-2010 |
| | | CN 101633360 A | 27-01-2010 |
| | | EP 2147843 A1 | 27-01-2010 |
| | | JP 2010030580 A | 12-02-2010 |
| | | KR 20100011871 A | 03-02-2010 |
| | | NZ 573067 A | 26-03-2010 |
| | | RU 2008146163 A | 27-05-2010 |
| | | US 2010018434 A1 | 28-01-2010 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 2958776